# EUROPEAN PATENT SPECIFICATION

(11) **EP 4 530 186 B1**
(45) Date of publication and mention of the grant of the patent: **04.11.2026**
(21) Application number: 23275143.8
(22) Date of filing: 27.09.2023
(51) Int. Cl.: B64D 11/04

(54) **GALLEY COMPARTMENT RETENTION ASSEMBLY**
BORDKÜCHENABTEILBEFESTIGUNGSANORDNUNG
ENSEMBLE DE RETENUE DE COMPARTIMENT D'OFFICE

(43) Date of publication of application: 02.04.2025
(73) Proprietor: B/E Aerospace (UK) Limited, Leighton Buzzard, Bedfordshire LU7 4TB (GB)
(72) Inventor: STEPHENSON, David Andrew, Bristol, BS6 6PA (GB); WALL, Daniel Hedley, Baldock, SG7 5FE (GB)
(74) Representative: Dehns

(56) References cited:
- EP-A1- 3 792 187
- EP-A1- 3 964 441
- EP-A1- 4 144 641
- EP-B1- 1 073 582
- EP-B1- 2 925 609
- FR-A1- 3 070 709

## Description

### Technical field

This disclosure relates to a retention assembly for a galley compartment, and to a handle assembly and mounting block which combine to form the galley compartment retention assembly.

### Background

It is known in the art that in vehicle galleys, compartments and trolleys are kept in place within a compartment using retaining handles, sometimes also known as turn buttons. These can be easily rotated from an open position to a closed or retaining position. In the open position the compartment is openable (e.g. the door is capable of being opened) or a trolley can be withdrawn from the compartment. In the closed or retaining position the compartment is held closed (e.g. the door is held in a closed position and prevented from unintentional opening) and a trolley is held in place within the compartment. Various vehicle galleys can use retaining handles, for example aircrafts, trains and boats. These retaining handles are required to keep the trolleys and compartments closed or retained even in certain crash scenarios, e.g. when subjected to certain crash forces. This is for safety reasons as open compartments or loose trolleys can result in loose objects within the vehicle which may injure passengers.

To be suitable for withstanding the various crash conditions, retaining handles or turn buttons are made from metallic parts, typically with a stainless-steel core and an aluminium cover. Mechanisms are provided internal to the retaining handle, normally detent mechanisms, which ensure that the handle stays in its retaining position unless it is subjected to a deliberate rotation action involving sufficient rotational force.

With each individual retaining handle being made from metal, the total weight of these small components can be significant. Many such handles are required in a galley to retain all the various compartments and trolleys. Typically, multiple handles may be required per compartment for safety and redundancy (or in the case of a removable unit such as a trolley, to prevent escape via rotation or slippage). A particular concern in aircraft is minimising weight on board as much as possible so as to reduce fuel requirements. In a single commercial aircraft around 100 retaining handles may be required in the galleys. When each individual retaining handle may weigh around 100g, the set of all retaining handles contributes a significant weight to an aircraft.

EP 3 964 441 A1 describes an aircraft trolley retention device that may include a retention latch with a shaft including a first component of an interlocking assembly and a sleeve including a second component of the interlocking assembly and configured to receive the shaft, and an interlocking assembly. The retention latch may be configured to actuate between a closed position and an open position. The interlocking assembly may be configured to guide the retention latch during the actuation between the closed position and the open position. The retention latch may be configured to retain an aircraft trolley within an aircraft trolley bay when the retention latch is in the closed position. A portion of the retention latch may be configured to be positioned in front of a striker plate corresponding to a handle of an aircraft trolley bay door of the aircraft trolley bay when the retention latch is in the open position.

EP 3 792 187 A1 describes an articulable panel in an aircraft galley including one or more latches to secure the articulable panel in three dimensions and maintain the structural, load bearing integrity of the overall structure. The latches include color-coded indicators for a quick visual verification that the latches are secured.

EP 2 925 609 B1 describes a galley cart bay door latch system which serves to secure catering or galley carts, as are used on commercial aircraft, within the aircraft's galley. The system relies on two substantially horizontally disposed latch levers to secure the galley door which in turn restrains a galley cart in position within the galley. Lever T bar retainer engage location nubs provided on the door to secure the door. Raising the latch lever releases the door and positively pushes the door outwardly. The latching configuration allows the doors to be slammed shut without the need to further manipulate the latch levers.

EP 4 144 641 A1 describes an item of galley equipment which includes an interior liner, a first and a second door, and a catch. The interior liner defines an interior and an access mouth. The catch comprises a static part and a mobile part. The first door comprises a first part of the catch. The second door comprises a second part of the catch. When both the first and second doors are in their closed position the first and second doors are adjacent to each other and close the access mouth and the static and mobile parts of the catch may reversibly engage with each other.

### Summary

According to a first aspect of this disclosure there is provided a vehicle galley compartment retention assembly in accordance with claim 3.

According to another aspect of the present disclosure there is provided a mounting block for mounting a vehicle galley compartment retaining handle assembly in a vehicle galley in accordance with claim 1.

For convenience, throughout this disclosure, the vehicle galley compartment retention assembly may be referred to as a retention assembly, and a vehicle galley compartment retaining handle assembly may also be referred to as a handle assembly. The various aspects of this disclosure are suitable for a number of different vehicle galleys including ships, trains, boats and aircraft.

In the retention assembly of this disclosure the detent mechanism is provided to interact between a shaft on a handle assembly and a mounting block on the galley compartment. This differs from previous designs in which the detent mechanism is integrated fully within the handle. In the previous designs, the retaining handle rotates relative to the shaft with the detent mechanism operating between the handle and the shaft. The shaft is then held within a mounting block in a non-rotatable manner. This means that the complex parts of the detent mechanism are part of the handle assembly. When the handle assembly gets damaged the whole assembly has to be replaced, including the entirety of the detent mechanism. In addition, as the detent mechanism generally requires strong metal components to resist the wear of repeated operations, the whole handle has typically been metal and thus heavy. The arrangement of the present disclosure differs from these prior designs in that one part of the detent mechanism is on the shaft and the other is in the mounting block. The shaft rotates within the mounting block while the handle is fixed to the shaft so that both rotate together. This arrangement moves part of the complex detent mechanism away from the retaining handle. By removing the requirements associated with repeated interactions with a detent mechanism, for example high durability, it will be appreciated that the retaining handle can be made from a lighter weight material while still providing the strength required to hold compartments closed and trolleys retained under the required crash conditions. As the handle assembly can now contain less of the detent mechanism (it only needs to include one of the cooperating features), it can also be cheaper to manufacture and thus cheaper to replace in cases of damage. The other part of the detent mechanism is in the mounting block which is far less susceptible to damage and less likely to need replacement.

The skilled person will appreciate that the features recited below will be separately applicable to the retention assembly as a whole, and to the interacting parts of the mounting block and to the handle assembly. The handle assembly may be configured to be inserted into the mounting block, leaving the retaining handle accessible to a user to rotate for operation.

The skilled person will appreciate that the fixing means may be any suitable means to affix the handle assembly to the mounting block, which keeps it in place when specified crash forces are applied. The fixing means may be permanent, or it may allow for the handle assembly to be removed and replaced. In some examples the fixing means is a bolt. The handle assembly may be configured with a bolt hole in the shaft through which a bolt can be inserted. The retaining assembly may be configured such that a bolt is inserted through the shaft of the handle assembly into a thread in the cavity of the mounting block.

In operation, a detent feature on the shaft interacts with a detent feature in the mounting block so as to retain the two parts in a given positional relationship (e.g. a given angle of the handle relative to the mounting block). The detent features may take any suitable form for achieving this function. In some examples the shaft can have a cylindrical cross-section, and the detent features are provided on the shaft. In another set of examples the shaft does not have a cylindrical cross-section (e.g. triangular, squared, hexagonal etc. cross-section), and the detent feature may be provided as a corner of the shaft. However, in typical examples, (i.e. where the shaft is cylindrical) one detent feature is a recess (or dimple) while the other is a corresponding projection that is capable of resting within the recess such that its motion is restricted. The detent feature is biased into position, e.g. by a spring, so that a modest force will cause the two detent features to separate, compressing the spring, and permitting movement away from the detained position. For example, in certain implementations, the projection feature may be in the form of a ball bearing biased towards the recess by a spring. A sufficient force will cause the ball bearing to compress the spring, ride up the side of the recess and permit movement away from the detained position. It will be appreciated that it is equally viable to bias a small block with a recess in it towards a fixed projection with similar results.

Thus, in some examples the first shaft detent feature may be a detent mechanism arranged to bias a projection (e.g. a ball bearing) or a recessed block towards a corresponding fixed feature on the inside of the cavity. However, as noted above, the retaining handle assembly may need more frequent replacement. As the biased detent mechanism is a more complex and expensive part, it is desirable that the detent feature on the shaft is as simple and easy to manufacture as possible. Therefore, in some examples the first shaft detent feature is a recess (e.g. an indent or dimple) or a protrusion (e.g. a bump). Such features can simply be moulded or machined on the shaft with little expense as there are no moving parts and no additional assembly steps. In such cases, the cavity detent feature may be a biased detent mechanism as discussed above (e.g. a ball bearing on a spring or a block with a recess or a spring). As the mounting block is less likely to require replacement, this arrangement is convenient from a cost perspective.

A detent mechanism is integral to the mounting block. In some examples the detent mechanism is insertable into the mounting block at a first location. In some examples the detent mechanism is insertable into a bore hole which extends from the outside of the mounting block to the cavity. The detent mechanism can then be inserted into (and fixed into) the bore so as to interact with the shaft when present. the detent mechanism is configurable to produce a bias in the direction of the cavity (and thus towards the shaft). The first shaft detent feature can equally be configurable to interact with the detent mechanism in the cavity (i.e. the cavity detent feature). The detent mechanism comprises an adjustable mechanism configured to adjust the bias force (e.g. spring force) of the detent mechanism. The adjustable mechanism can be accessible from the outside of the mounting block, e.g. through the bore described above. In some examples the adjustable mechanism is a screw (e.g. a grub screw) which can interact with the spring to increase or decrease the biasing force of the spring towards the cavity by adjusting a preload on the spring. This enables minor adjustments to be made in situ so as to ensure the required stiffness of engagement/disengagement.

In some examples the shaft further comprises a second shaft detent feature. In some examples the shaft further comprises a third shaft detent feature. It will be appreciated that each of the shaft detent features (i.e. the first and second and third) may be configured to interact with the cavity detent feature in the same manner, just in different rotational positions on the shaft. So, they are either all detent mechanisms, all indents or all protrusions. The first, second and third shaft detent features may all be configured to interact with the same (single) cavity detent feature. For example, three recesses on the shaft, may each interact with a sprung ball bearing in the cavity, thereby providing three different angular positions at which the shaft is detained relative to the mounting block.

It will be appreciated that shaft detent feature(s) can be located in suitable locations so as to be configured to releasably hold the handle assembly in a given angular position relative to the mounting block. The shaft detent feature(s) may be located on the outer surface of the shaft and the cavity detent feature may be located on the inner surface of the cavity such that the shaft and cavity detent features are configured to interact with each other to hold the handle assembly in a predetermined angular position when aligned. For example, the first shaft detent feature may be configured to interact with a cavity detent feature to releasably hold the assembly in a first angular position. The first angular position may correspond to a 0 degree rotation of the handle assembly, such that when in the first position the handle assembly may be configured to retain a compartment in a vehicle galley. Similarly, the second shaft detent feature may be configured to interact with a cavity detent feature to releasably hold the assembly in a second angular position. The second angular position may correspond to a 90 degree rotation of the handle assembly, such that when in the second position the handle assembly may be configured to release a compartment in a vehicle galley (e.g. so that a door can open or a trolley can be removed). The third shaft detent feature may be configured to interact with a cavity detent feature to releasably hold the assembly in a third angular position. The third angular position may correspond to a 30 degree rotation or 45 degree rotation or a 60 degree rotation of the handle assembly (by way of example), such that when in the third position the handle assembly may be configured to partially release a compartment in a vehicle galley, for example by allowing a door on a trolley (or other removable unit) to open, but not permitting the trolley (or other removable unit) to be removed from the compartment.

The skilled person will appreciate that the detent feature and detent mechanism can be positioned in any reasonable locations in the shaft and cavity. In some examples the shaft detent feature(s) is/are located on the end of the shaft, e.g. at an axial end opposite to the retaining handle, e.g. as a projection or recess which projects or recedes in the axial direction of the shaft. In some examples the shaft detent feature(s) is/are located on the radially outer surface of the shaft. The radially outer surface of the shaft is generally not used for other features and so is a convenient place to locate detent features as well as making a larger volume of the mounting block available for the corresponding detent part for improved design flexibility. Where multiple detent features are used it is of course possible to combine axial and radial positions, although it is generally beneficial for all detent features on one part (shaft or mounting block) to interact with a single detent feature on the other part.

It will be appreciated by the skilled person that whilst the handle assembly could reasonably turn through a full 360 degree rotation, it may be desirable to limit the rotation of the handle assembly to within a predetermined angular range. In this way the retaining assembly can be limited to go from an open position to a closed position, where the limits can act to guide the rotation to one of the predetermined angular positions to make it easier for the shaft detent feature(s) to locate the cavity detent feature. The predetermined angular range may allow rotation between the first angular position and the second angular position. These may provide a well-defined open position (proximate to one limit) and a well-defined closed or retained position (proximate the other limit). In some examples the predetermined angular range is around 90 degrees. The mounting block may further comprise a mounting block limiting means. The shaft may further comprise a shaft limiting means. The mounting block limiting means may be configured to limit the rotation of the handle assembly to the predetermined angular range. The shaft limiting means may be configured to interact with the mounting block limiting means to limit the rotation of the handle assembly to the predetermined angular range. In some examples the mounting block limiting means is configured to protrude into the cavity. In some examples the mounting block limiting means comprises a pair of limit screws inserted into the mounting block, comprising a first limit screw inserted at a first limit position and a second screw inserted at a second limit position, the first limit position arranged to limit the handle assembly to the first angular position, and the second limit position arranged to limit the handle assembly to the second angular position. In some examples the shaft limiting means comprises a shaped portion configured to interact with the mounting block limiting means to limit the rotation of the handle assembly to a predetermined angular range. The shaped portion may be in the form of an arc which extends around part of the circumference of the shaft (and optionally at the axial end of the shaft opposite the retaining handle). The two ends of the arc provide stops that will prevent rotation of the shaft when they abut against a corresponding limiting means in the mounting block. By appropriate choice of the length and position of the arc and the locations of the mounting block limiting means, the possible rotational range of the handle assembly can be readily defined. This arrangement is particularly convenient when employed in combination with fixed detent features on the radially outer surface of the shaft and a biased detent mechanism inside the cavity. In particular, when the biased detent mechanism and first and second limit screws can all be inserted through bores in the mounting block that connect with the cavity. Thus, the same machining process applies to all three components. Similarly, the shaped end portion of the shaft and the shaped detent features (projections or recesses) can all be formed on the shaft by the same moulding or milling process. This makes the parts faster and less expensive to manufacture.

It will be appreciated that the requirements for the different components of the retaining assembly of this disclosure may vary with the size of compartment or trolley that is being retained, its location, and the specific vehicle. The requirements for the force that they must be able to withstand varies depending on the type of vehicle and the locations of the galley compartments. For example, a sideways compartment will have different requirements to a front facing compartment, which will have different requirements to a backward facing compartment in an aircraft galley. Each orientation experiences different critical conditions in the event of a crash and thus may have different design requirements for the retaining handle. Whilst the mounting block can be standardised between all vehicle galleys, each specific scenario may allow the fixing means and the handle assembly to be produced to different specifications. For example, in crash scenarios where the retaining assemblies must endure 300 kg of crash force, the shaft and/or bolt may be shorter than if the retaining assembly must be capable of enduring 1 tonne of crash force. Similarly, the length and width of the retaining handle can be adapted depending on the specific use of the handle assembly and the thickness of the shaft may be varied to reduce weight while ensuring sufficient strength to meet safety requirements.

The shaft of the handle assembly, when configured to have indents or protrusions as detent feature(s), will be required to be durable to ensure that the detent feature retains its shape and functionality after prolonged use (e.g. after many thousands of operations to engage and disengage the detent features). In some examples the shaft is metallic. The shaft may be stainless steel, or any other suitable material that provides the required durability. If the shaft is less durable, the handle assembly can be replaced as required.

In some examples, the retaining handle protrudes radially from at least a first end of the shaft. The retaining handle may be configured so as to retain its load under a predetermined crash force. The predetermined crash force may be for example 300 kg or 1 tonne. In some examples the retaining handle comprises a lightweight high strength material. As such is can be designed to be capable of withstanding a variety of predetermined crash forces. In some examples the retaining handle comprises a composite material, for example a fibre composite material such as fibre reinforced polymer. Example materials include carbon fibre reinforced polymer and glass-fibre reinforced polymer. In some examples the retaining handle is cured directly onto the shaft. This can ensure that each component of the handle assembly is designed to meet the relevant requirements, whilst ensuring they rotate together and do not separate in use.

It will be appreciated that any of the features disclosed above with relation to the mounting block, handle assembly and retaining assembly are mutually applicable.

According to another aspect of the present disclosure there is provided a vehicle galley compartment retention assembly, the assembly comprising:
a handle assembly as described above;
a mounting block as described above; and
a fixing means configured to fix the handle assembly to the mounting block, whilst allowing for rotational movement of the handle assembly relative to the mounting block;
wherein the shaft of the handle assembly is configured to be inserted into the cavity of the mounting block, and to be rotatable within the cavity, and
wherein the shaft detent feature and the cavity detent feature are configured to interact with each other to hold the retaining handle in a first angular position when rotationally aligned.

### Detailed description

Certain preferred examples of this disclosure will now be described, by way of example only, with reference to the accompanying drawings, in which:
FIG. 1 shows an expanded diagram of the retaining assembly according to an example of the present disclosure;
FIG. 2 shows a perspective view of the retaining assembly according to an example;
FIG. 3A shows the handle assembly interacting with some of the features of the mounting block in a first position according to an example;
FIG. 3B shows the handle assembly interacting with some of the features of the mounting block in a second position according to an example; and
FIG. 4 shows a vehicle galley with retaining assemblies according to an example.

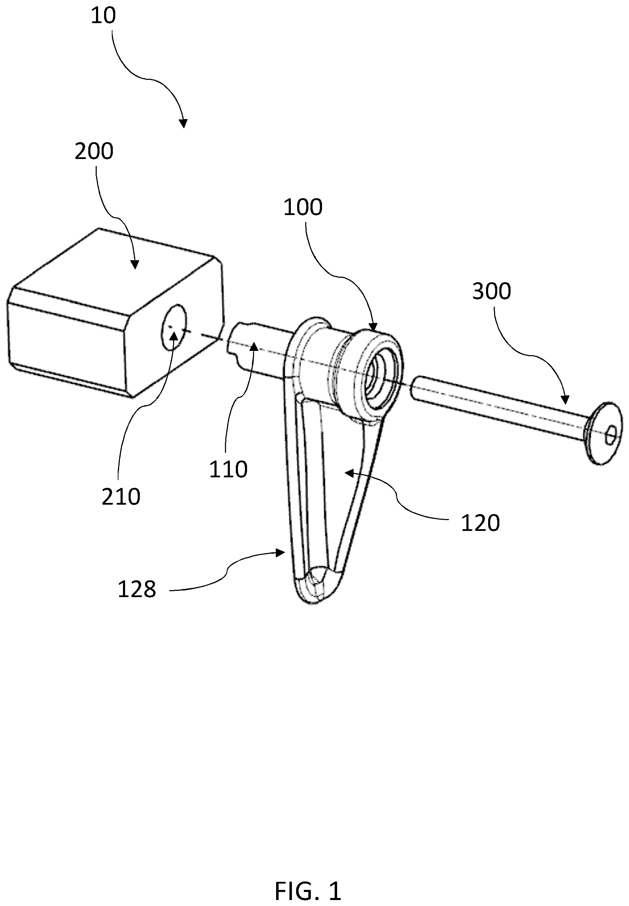

FIG. 1 shows an example retaining assembly 10 with a handle assembly 100, a mounting block 200 and a bolt 300. The mounting block 200 is shown with a cavity 210, into which a shaft 110 of the handle assembly 100 can be inserted leaving the retaining handle 120 on the outside of the apparatus so that it can be rotated when in use. The retaining handle 110 is shown as protruding radially from one end of the shaft 120 (radially downwards in the figure).

The handle assembly 100 is secured into the mounting block 200 with the bolt 300. The dotted line represents an axis through which the handle assembly 100 and the bolt 300 are inserted into the mounting block 200 and around which the handle assembly 100 is rotatable. In this example the handle assembly 100 is shown as having a hollow section i.e. through the retaining handle 120 and the shaft 110, through which the bolt 300 can pass to be secured into the mounting block 200.

In this example the bolt 300 is shown to have a length that will pass through the whole of the handle assembly 100 and the mounting block 200. The skilled person will appreciate that the size (i.e. the diameter), length and material from which the bolt 300 is made will have different requirements depending on the requirements for the whole of the retaining assembly and the forces that it needs to resist. For example, in high crash force sites the bolt 300 may have a larger diameter, be of a stronger material and/or have a longer length than in lower crash force sites in a galley (e.g. front facing vs rear facing galley compartments in an aircraft). In some examples the bolt 300 is metallic, for example stainless steel. It will be appreciated that in a crash scenario the bolt takes tension forces from the retaining handle 120, whereas the shaft 110 of the handle assembly needs to resist bending stresses which can amount to a majority of the load from the retaining handle 120 when a significant load is exerted on the retaining face 128 which faces towards the compartment. The degree to which the shaft can withstand any bending forces will depend on the radius of the shaft. The retaining handle 120 can be made of a composite material which can be cured directly onto a metallic shaft 110. The metallic shaft 110 can be designed to withstand the potential bending forces arising in a crash scenario in an improved manner as the shaft 110 is substantially hollow. The retaining handle 110 can be configured to resist the crash forces applied to its retaining face 125. This can be achieved with composite materials such as carbon fibre reinforced polymer while being lighter weight than the previous metal components.

By forming the retaining handle from a lightweight composite material, and/or reducing the diameter of the metallic shaft and/or reducing the size of the bolt, the overall weight of the retaining assembly 10 can be significantly reduced. In some cases, the weight can be around one half of the weight of existing designs in which the retaining handle is metal. The composite retaining handle 120 may be more susceptible to cosmetic damage in use (while still retaining its strength for safety), but it can also be easily removed and replaced as required with little expense due to the more complex parts of the mechanism being situated in the mounting block.

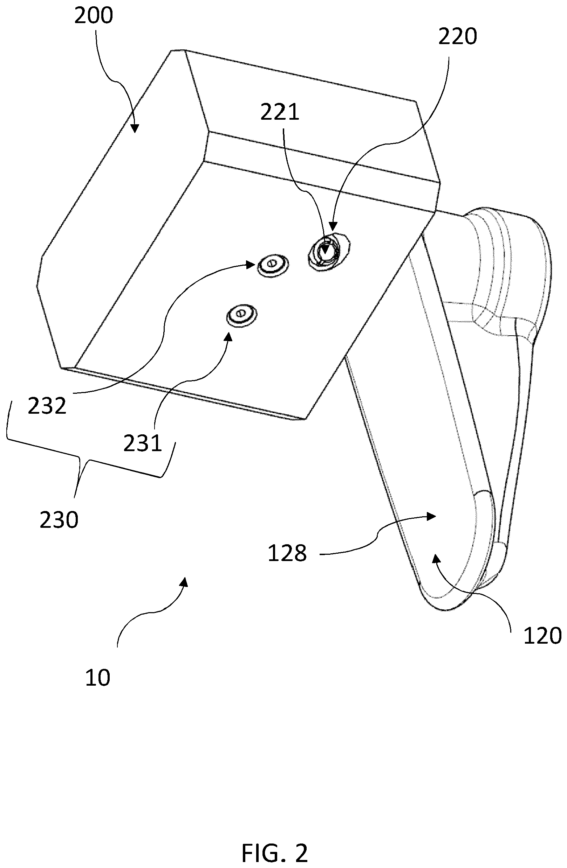

FIG. 2 shows the retaining assembly 10 when assembled. The view is from an underside. The retaining handle 120 is shown in a first position in which a compartment in a galley would be held closed or retained in place. The opening of the compartment, or its removal, is blocked by the retaining face 128 of the retaining handle 120. On the underside of the mounting block 200 a detent mechanism 220 and limiting means 230 are shown. In this example the detent mechanism is in a partially threaded shaft (not shown) extending between the bottom of the mounting block 200 and the cavity (not shown) so that a grub screw 221 can be used from the bottom of the mounting block 200 as part of an adjusting mechanism for the detent mechanism. A spring is positioned between the grub screw and a ball bearing to bias the ball bearing towards the cavity. The skilled person will appreciate that the inner edge of the partially threaded shaft at the cavity end may have a diameter slightly less than the diameter of the ball bearing to prevent the detent mechanism from pushing the ball bearing into the cavity when not interacting with the handle assembly. Screwing the grub screw 221 in or out will adjust the preload in the spring, thereby adjusting the biasing force.

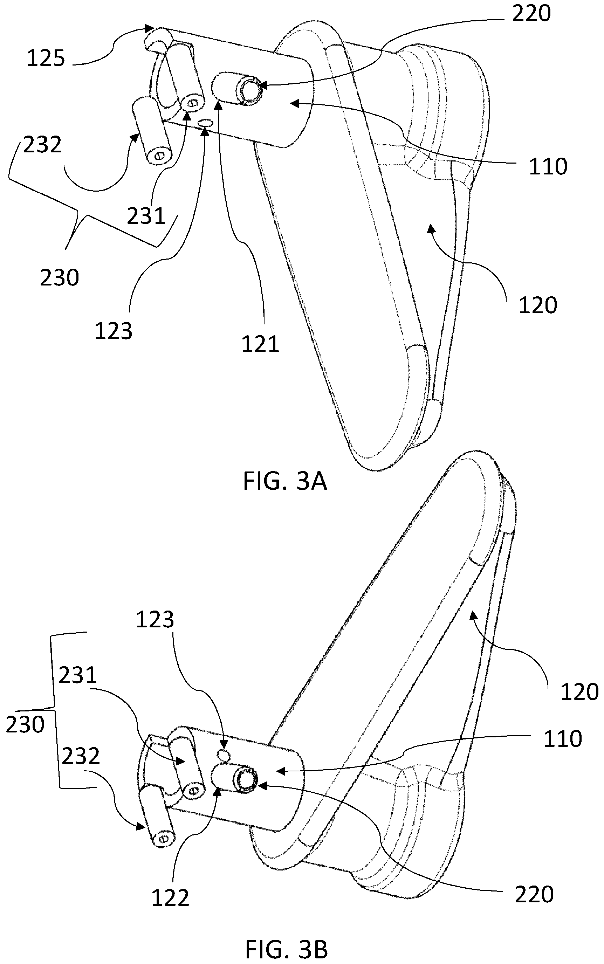

In the present example the mounting block limiting means 230 comprises a pair of limit screws 231, 232 inserted into the mounting block 200 in a predetermined position which corresponds to a given position of the shaft to limit the rotation of the handle assembly within the mounting block to a predetermined angular range, as will be explained in more detail with reference to FIGs. 3A and 3B below. Each screw 231 is inserted through a respective bore in the mounting block 200 that extends from the outside of the mounting block 200 through to the cavity 210.

In FIGs. 3A and 3B the mounting block 200 has been removed for clarity, but the mounting block limiting means 230 (limit screws 231, 232) and detent mechanism 220 are shown in the positions in which they would be held by the mounting block 200 and thus in the positions in which they interact with the shaft 110 of the handle assembly 100. These figures show the interactions which occur inside the cavity 210. In FIG. 3A the handle assembly 100 is shown in a first angular position corresponding to a closed or retained position in which a compartment is held closed or a trolley (or the like) is retained in place. This first angular position corresponds to the position shown in FIGs. 1 and 2. In FIG. 3B the handle assembly 100 is shown in a second angular position corresponding to a position where a compartment can be opened or a trolley (or the like) can be removed from a vehicle galley.

Shown in FIGs. 3A and 3B as part of the handle assembly 100 is the retaining handle 120, the shaft 110, the first shaft detent feature 121 (hidden from view under the cavity detent mechanism 220 in FIG. 3A) and the third shaft detent feature 123 on the radially outer surface of the shaft 110. A second shaft detent feature 122 (hidden from view under the cavity detent mechanism 220 in FIG. 3B) is out of view in FIG. 3A, further round the shaft from the third detent feature 123 (i.e. such that the third detent feature is positioned between the first detent feature and the second detent feature). A shaped portion 125 is also shown on the end of the shaft 110, having an arc shape extending through a ninety degree angle on the axial end of the shaft 110 opposite the retaining handle 120. As part of the mounting block the limiting means 230 comprises a first limit screw 231 a second limit screw 232, and the detent mechanism 220. These are shown interacting with the first shaft detent feature 121 and the second shaft detent feature 122. The shaft detent features 121, 122 123 are shown as indents or recesses in the shaft 110 and are configured to interact with the ball bearing of the detent mechanism 220 as described above.

In FIG. 3A the detent mechanism 220 is shown interacting with the first shaft detent feature 121 to hold the retaining handle in the first angular position. In this position a first end of the shaped portion 125 abuts the first limit screw 231 so that the handle assembly 100 cannot be rotated further in one angular direction. Also seen in FIG. 3A is the third shaft detent feature 123 which is located on the radially outer surface of the shaft 120 and axially in line with the first and second shaft detent features 121, 122, so as to interact with the detent mechanism 220 to hold the handle assembly in a third angular position (which is not shown in the figures).

In FIG. 3B the handle assembly 100 has been rotated though an angle of 90 degrees such that the detent mechanism 220 now interacts with the second detent feature 122. In this view, the first detent feature 121 has been rotated out of view. In this second angular position the retaining handle 120 is held up so as not to interfere with a galley compartment so that it can be opened and/or removed from a galley. In this second angular position the second end of the shaped portion 125 of the shaft 120 abuts the second limit screw 232 so as to prevent further angular rotation in a second angular direction. It will be appreciated that in the example shown here, the limit screws 231, 232 are arranged 180 degrees apart. The shaped end portion 125 has an arc length of 90 degrees, which leaves 90 degrees (180 - 90) remaining for permitted rotation. However, these are only examples and other angular freedom can be designed by adjusting the positions of the limit screws 231, 232 and the arc length of the shaped portion 125.

Whilst in this example the shaped portion 125 is shown as an arc (or viewed differently, as a 270 degree cut out) feature on the end of the shaft 120 the skilled person will appreciate that there are various alternative implementations with a limiting means being provided in the mounting block interacting with part of the shaft 120 which can limit the angular rotation of the handle assembly 120. In another example, not shown, the mounting block limiting means 230 is a single screw which interacts with an arc or a cut out portion of the shaft 125.

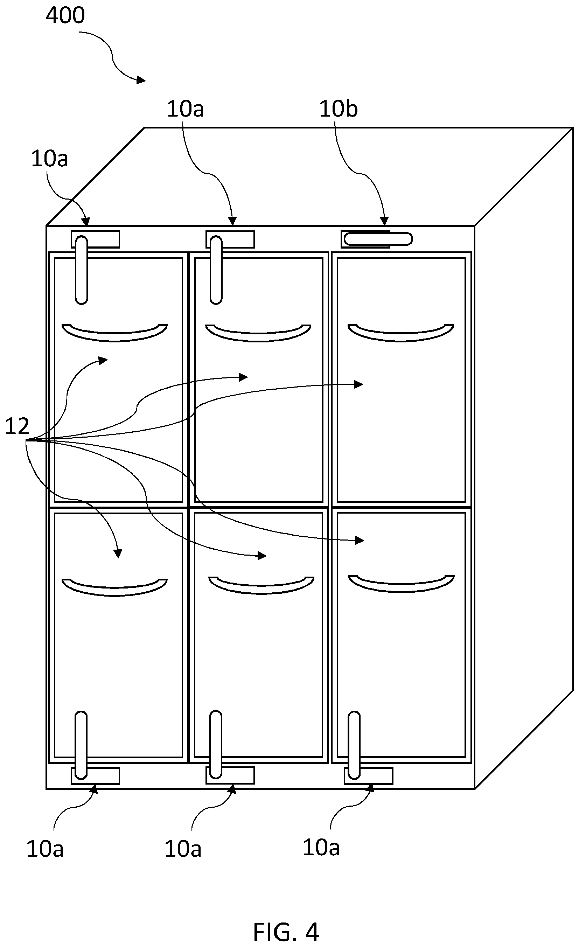

FIG. 4 shows an example aircraft galley 400 in which the retaining assembly 10 can be installed. The skilled person will appreciate that whilst an aircraft galley is shown in this example the vehicle galley may be any other type of vehicle galley, including but not limited to a train or a boat. The aircraft galley 400 has a number of compartments 12 which are required to be securely retained closed or in place when not in use during transit. In this example five of the compartments 12 are held in place by the retaining assembly 10a with the handle assembly 100 in the first angular position (or retained position). The remaining compartment 12 is not secured as the retaining assembly 10b is shown with the handle assembly 100 in the second angular position i.e. with the retaining handle rotated by 90 degrees so as not to block the opening of the compartment 12 or the removal of the compartment from the space. Whilst in this example each compartment 12 has a single retaining assembly 10a, 10b to secure the compartment 12, in some other examples multiple retaining assemblies are used for a single compartment 12. In some examples the length of the retaining handle is the same for all retaining assemblies 10a, 10b. However, in some other examples the retaining handle for a second retaining assembly 10a, 10b may be shorter than the first. This is convenient when one handle only needs to be long enough to retain a removable compartment (such as a trolley) while another longer handle serves a dual purpose of retaining the compartment as well as holding a door of the compartment shut.

It will be appreciated that the fixing means (e.g. bolt) and handle assembly designs can be easily varied to fit the same type of mounting block, allowing for different handle assemblies to be interchangeable once a mounting block is installed in a galley. This then gives full flexibility for the end user depending on the location and use of the retaining assembly 10a, 10b. As the retaining handle 120 is simpler and less expensive to manufacture, changes of appearance (e.g. for rebranding) are also less costly as the more complex mounting block does not need replacement.

It will be appreciated by those skilled in the art that the disclosure has been illustrated by describing one or more specific aspects thereof, but is not limited to these aspects; many variations and modifications are possible, within the scope of the accompanying claims.

## Claims

1. A mounting block (200) for mounting a vehicle galley compartment retaining handle assembly (100) in a vehicle galley, the mounting block (200) comprising:
a cavity (210) configured to receive a shaft (110) of the handle assembly (100); and
a cavity detent feature (220) on the inner surface of the cavity, configured to interact with at least one detent feature on the shaft;
wherein the cavity detent feature is a detent mechanism (220) configured to produce a bias in the direction of the cavity (210); and
**characterised in that**:
the detent mechanism (220) further comprises an adjustable mechanism (221) configured to adjust the biasing force of the detent mechanism (220).

2. A mounting block (200) according to claim 1, wherein the mounting block (200) further comprises a limiting means (230) protruding into the cavity (210) and configured to limit the rotation of the handle assembly (100) to a predetermined angular rotation.

3. A vehicle galley compartment retention assembly (10), the assembly comprising:
a handle assembly (100);
a mounting block (200) according to claim 1 or 2; and
a fixing means (300) configured to fix the handle assembly (100) to the mounting block (200), whilst allowing for rotational movement of the handle assembly (100) relative to the mounting block (200);
wherein the handle assembly (100) comprises: a shaft (110) comprising a first shaft detent feature (121, 122, 123); and a retaining handle (120), wherein the retaining handle (120) is fixed relative to the shaft (110) such that the shaft (110) rotates when the retaining handle (120) is rotated;
wherein the shaft (110) of the handle assembly (100) is configured to be inserted into the cavity (210) of the mounting block (200), and to be rotatable within the cavity (210), and
wherein the shaft detent feature (121, 122, 123) and the cavity detent feature (220) are configured to interact with each other to hold the retaining handle (120) in a first angular position when rotationally aligned.

4. A vehicle galley compartment retention assembly (10) according to claim 3, wherein the shaft further comprises a second detent feature (122, 123).

5. A vehicle galley compartment retention assembly (10) according to claim 4, wherein the shaft (110) further comprises a third detent feature (123).

6. A vehicle galley compartment retention assembly (10) according to any of claims 3 to 5, wherein the or each shaft detent feature (121, 122, 123) is a recess or wherein the or each detent feature is a projection.

7. A vehicle galley compartment retention assembly according to any of claims 3 to 6, wherein the or each shaft detent feature (121, 122, 123) is located on the radially outer surface of the shaft (110).

8. A vehicle galley compartment retention assembly (10) according to any of claims 3 to 7, wherein the shaft (110) comprises a shaft (110) rotation limiter to limit the rotation of the handle assembly (100) to a predetermined angular range.

9. A vehicle galley compartment retention assembly (10) according to any of claims 3 to 8, wherein the shaft (110) is made from metal.

10. A vehicle galley compartment retention assembly (10) according to any of claims 3 to 9 wherein the retaining handle (120) is made from a lightweight high strength material.

11. A vehicle galley compartment retention assembly (10) according to any of claims 3 to 10, wherein the retaining handle (120) is made from a composite material.

12. A vehicle galley compartment retention assembly (10) according to claim 11, wherein the composite material is cured directly onto the shaft (110).

13. A mounting block (200) or a vehicle galley compartment retention assembly (10) according to any preceding claim, wherein the vehicle galley is an aircraft galley.

## Patentansprüche

1. Ein Befestigungsblock (200) zur Befestigung einer Haltegriffanordnung (100) eines Fahrzeug-Galley-Fachs in einer Fahrzeug-Galley, wobei der Befestigungsblock (200) umfasst:
einen Hohlraum (210), der konfiguriert ist, um eine Welle (110) der Griffanordnung (100) aufzunehmen;
und
ein Hohlraum-Rastmerkmal (220) an der Innenfläche des Hohlraums, das konfiguriert ist, um mit mindestens einem Rastmerkmal an der Welle zusammenzuwirken;
wobei das Hohlraum-Rastmerkmal ein Rastmechanismus (220) ist, der konfiguriert ist, um eine Vorspannung in Richtung des Hohlraums (210) zu erzeugen; und
**dadurch gekennzeichnet, dass**:
der Rastmechanismus (220) ferner einen einstellbaren Mechanismus (221) umfasst, der konfiguriert ist, um die Vorspannkraft des Rastmechanismus (220) einzustellen.

2. Ein Befestigungsblock (200) nach Anspruch 1, wobei der Befestigungsblock (200) ferner ein Begrenzungsmittel (230) umfasst, das in den Hohlraum (210) hineinragt und konfiguriert ist, um die Drehung der Griffanordnung (100) auf eine vorbestimmte Winkeldrehung zu begrenzen.

3. Eine Fahrzeug-Galley-Fach-Rückhalteanordnung (10), wobei die Anordnung umfasst:
eine Griffanordnung (100);
einen Befestigungsblock (200) nach Anspruch 1 oder 2; und
ein Befestigungsmittel (300), das konfiguriert ist, um die Griffanordnung (100) an dem Befestigungsblock (200) zu befestigen, während es eine Drehbewegung der Griffanordnung (100) relativ zum Befestigungsblock (200) ermöglicht;
wobei die Griffanordnung (100) umfasst: eine Welle (110), umfassend ein erstes Wellenrastmerkmal (121, 122, 123); und einen Haltegriff (120), wobei der Haltegriff (120) relativ zur Welle (110) fixiert ist, so dass sich die Welle (110) dreht, wenn der Haltegriff (120) gedreht wird;
wobei die Welle (110) der Griffanordnung (100) konfiguriert ist, um in den Hohlraum (210) des Befestigungsblocks (200) eingesetzt zu werden, und um innerhalb des Hohlraums (210) drehbar zu sein, und
wobei das Wellenrastmerkmal (121, 122, 123) und das Hohlraum-Rastmerkmal (220) konfiguriert sind, um miteinander zusammenzuwirken, um den Haltegriff (120) in einer ersten Winkelposition zu halten, wenn sie rotatorisch ausgerichtet sind.

4. Eine Fahrzeug-Galley-Fach-Rückhalteanordnung (10) nach Anspruch 3, wobei die Welle ferner ein zweites Rastmerkmal (122, 123) umfasst.

5. Eine Fahrzeug-Galley-Fach-Rückhalteanordnung (10) nach Anspruch 4, wobei die Welle (110) ferner ein drittes Rastmerkmal (123) umfasst.

6. Eine Fahrzeug-Galley-Fach-Rückhalteanordnung (10) nach einem der Ansprüche 3 bis 5, wobei das oder jedes Wellenrastmerkmal (121, 122, 123) eine Vertiefung ist oder wobei das oder jedes Rastmerkmal ein Vorsprung ist.

7. Eine Fahrzeug-Galley-Fach-Rückhalteanordnung nach einem der Ansprüche 3 bis 6, wobei das oder jedes Wellenrastmerkmal (121, 122, 123) an der radial äußeren Oberfläche der Welle (110) angeordnet ist.

8. Eine Fahrzeug-Galley-Fach-Rückhalteanordnung (10) nach einem der Ansprüche 3 bis 7, wobei die Welle (110) einen Wellen-(110)-Drehbegrenzer umfasst, um die Drehung der Griffanordnung (100) auf einen vorbestimmten Winkelbereich zu begrenzen.

9. Eine Fahrzeug-Galley-Fach-Rückhalteanordnung (10) nach einem der Ansprüche 3 bis 8, wobei die Welle (110) aus Metall besteht.

10. Eine Fahrzeug-Galley-Fach-Rückhalteanordnung (10) nach einem der Ansprüche 3 bis 9, wobei der Haltegriff (120) aus einem leichten hochfesten Material besteht.

11. Eine Fahrzeug-Galley-Fach-Rückhalteanordnung (10) nach einem der Ansprüche 3 bis 10, wobei der Haltegriff (120) aus einem Verbundwerkstoff besteht.

12. Eine Fahrzeug-Galley-Fach-Rückhalteanordnung (10) nach Anspruch 11, wobei der Verbundwerkstoff direkt auf die Welle (110) aufgehärtet wird.

13. Ein Befestigungsblock (200) oder eine Fahrzeug-Galley-Fach-Rückhalteanordnung (10) nach einem der vorherigen Ansprüche, wobei die Fahrzeug-Galley eine Flugzeug-Galley ist.

## Revendications

1. Un bloc de montage (200) pour monter un ensemble poignée de retenue de compartiment d'office de bord de véhicule (100) dans un office de bord de véhicule, le bloc de montage (200) comprenant :
une cavité (210) configurée pour recevoir un arbre (110) de l'ensemble poignée (100) ; et
un élément de crantage de cavité (220) sur la surface intérieure de la cavité, configuré pour interagir avec au moins un élément de crantage sur l'arbre ;
dans lequel l'élément de crantage de cavité est un mécanisme de crantage (220) configuré pour produire une sollicitation dans la direction de la cavité (210) ; et
**caractérisé en ce que** :
le mécanisme de crantage (220) comprend en outre un mécanisme réglable (221) configuré pour ajuster la force de sollicitation du mécanisme de crantage (220).

2. Un bloc de montage (200) selon la revendication 1, dans lequel le bloc de montage (200) comprend en outre un moyen de limitation (230) faisant saillie dans la cavité (210) et configuré pour limiter la rotation de l'ensemble poignée (100) à une rotation angulaire prédéterminée.

3. Un ensemble de retenue de compartiment d'office de bord de véhicule (10), l'ensemble comprenant :
un ensemble poignée (100) ;
un bloc de montage (200) selon la revendication 1 ou 2 ; et
un moyen de fixation (300) configuré pour fixer l'ensemble poignée (100) au bloc de montage (200), tout en permettant un mouvement de rotation de l'ensemble poignée (100) par rapport au bloc de montage (200) ;
dans lequel l'ensemble poignée (100) comprend : un arbre (110) comprenant un premier élément de crantage d'arbre (121, 122, 123) ; et une poignée de retenue (120), dans lequel la poignée de retenue (120) est fixée par rapport à l'arbre (110) de telle sorte que l'arbre (110) tourne lorsque la poignée de retenue (120) est tournée ;
dans lequel l'arbre (110) de l'ensemble poignée (100) est configuré pour être inséré dans la cavité (210) du bloc de montage (200), et pour pouvoir tourner à l'intérieur de la cavité (210), et
dans lequel l'élément de crantage d'arbre (121, 122, 123) et l'élément de crantage de cavité (220) sont configurés pour interagir l'un avec l'autre afin de maintenir la poignée de retenue (120) dans une première position angulaire lorsqu'ils sont alignés en rotation.

4. Un ensemble de retenue de compartiment d'office de bord de véhicule (10) selon la revendication 3, dans lequel l'arbre comprend en outre un second élément de crantage (122, 123).

5. Un ensemble de retenue de compartiment d'office de bord de véhicule (10) selon la revendication 4, dans lequel l'arbre (110) comprend en outre un troisième élément de crantage (123).

6. Un ensemble de retenue de compartiment d'office de bord de véhicule (10) selon l'une quelconque des revendications 3 à 5, dans lequel le ou chaque élément de crantage d'arbre (121, 122, 123) est un évidement ou dans lequel le ou chaque élément de crantage est une saillie.

7. Un ensemble de retenue de compartiment d'office de bord de véhicule selon l'une quelconque des revendications 3 à 6, dans lequel le ou chaque élément de crantage d'arbre (121, 122, 123) est situé sur la surface radialement extérieure de l'arbre (110).

8. Un ensemble de retenue de compartiment d'office de bord de véhicule (10) selon l'une quelconque des revendications 3 à 7, dans lequel l'arbre (110) comprend un limiteur de rotation de l'arbre (110) pour limiter la rotation de l'ensemble poignée (100) à une plage angulaire prédéterminée.

9. Un ensemble de retenue de compartiment d'office de bord de véhicule (10) selon l'une quelconque des revendications 3 à 8, dans lequel l'arbre (110) est fabriqué en métal.

10. Un ensemble de retenue de compartiment d'office de bord de véhicule (10) selon l'une quelconque des revendications 3 à 9, dans lequel la poignée de retenue (120) est fabriquée à partir d'un matériau léger à haute résistance.

11. Un ensemble de retenue de compartiment d'office de bord de véhicule (10) selon l'une quelconque des revendications 3 à 10, dans lequel la poignée de retenue (120) est fabriquée à partir d'un matériau composite.

12. Un ensemble de retenue de compartiment d'office de bord de véhicule (10) selon la revendication 11, dans lequel le matériau composite est durci directement sur l'arbre (110).

13. Un bloc de montage (200) ou un ensemble de retenue de compartiment d'office de bord de véhicule (10) selon l'une quelconque des revendications précédentes, dans lequel l'office de bord de véhicule est un office de bord d'aéronef.
